# EUROPEAN PATENT SPECIFICATION

(11) **EP 1 241 288 B1**
(45) Date of publication and mention of the grant of the patent: **20.07.2005**
(21) Application number: 02004546.4
(22) Date of filing: 27.02.2002
(51) Int. Cl.: D04H 1/56

(54) **Three-dimensional non-woven fabric, method and mold for manufacturing the same**
Dreidimensionaler Vliesstoff, Verfahren und Form zu deren Herstellung
Tissu non-tissé tridimensionnel, méthode et moule pour le fabriquer

(30) Priority: 13.03.2001 JP 2001071208; 20.11.2001 JP 2001355018
(43) Date of publication of application: 18.09.2002
(73) Proprietor: Toyoda Boshoku Corporation, Kariya-shi Aichi-pref., 448-8651 (JP)
(72) Inventor: Takagaki, Takanari, Kariya-shi, Aichi-pref., 448-8651 (JP)
(74) Representative: Winter, Brandl, Fürniss, Hübner, Röss, Kaiser, Polte Partnerschaft Patent- und Rechtsanwaltskanzlei

(56) References cited:
- EP-A- 0 428 400
- WO-A-00/29656
- WO-A-99/47010
- US-A- 4 103 058
- US-A- 4 741 941
- US-A- 5 643 653
- PATENT ABSTRACTS OF JAPAN vol. 017, no. 131 (C-1036), 18 March 1993 (1993-03-18) & JP 04 305213 A (KURARAY CHEM CORP), 28 October 1992 (1992-10-28)

## Description

### BACKGROUND OF THE INVENTION

### 1. Field of Invention

The invention relates to a three-dimensional non-woven fabric formed by spinning semi-molten fibers onto a mold.

### 2. Description of Related Art

### Description of Related Art

US 4 103 058 discloses a mold for manufacturing a three-dimensional non-woven fabric by spinning semi-molten fibers onto the mold. The mold has a two-dimensional shape with identically formed, evenly distributed perforations or cells into which microfibers partially penetrate. EP 0 428 400 A1 discloses a three-dimensional non-woven fabric, formed by blowing microfibers onto a flat-shaped screen-like element resulting in a field of connected pillowed regions.

WO 99 47010 discloses a mask made of woven or non-woven fabrics and comprising compacted higher density regions and pillowed lower density regions arranged in a matrix, said mask being manufactured by conventional techniques for preparing blown microfibers, such as melt blowing, solution blowing, and air laying.

WO 00 29656 discloses a wave-shaped mold for manufacturing a three-dimensional non-woven fabric by spinning semi-molten fibers onto the mold, resulting in a layered structure having essentially the shape of said mold.

### SUMMARY OF THE INVENTION

**[1**|The invention enables a three-dimensional non-woven fabric having a complicated shape to be formed with a simple mold.**]**
**[2**|According to a first aspect of the invention, a mold for manufacturing a three-dimensional non-woven fabric by spinning semi-molten fibers comprises a first forming surface which has a plurality of wave-shaped portions and which is provided for forming a filtering portion, and at least one line-shaped member being mounted on ridges of the wave-shaped portions.
**] [3**|Such a member simplifies the shape of the mold, enabling a three-dimensional non-woven fabric having a complicated shape to be manufactured. This mold may include a forming portion on which the semi-molten fibers are stacked.**]**
**[4**|According to a second aspect of the invention, the line-shaped members are mounted on the ridges at a prescribed distance from each other.**]**
**[5**|According to a third aspect of the invention, a three-dimensional non-woven fabric is formed by using the mold and spinning semi-molten fibers onto the mold. The fabric comprises a plurality of wave-shaped portions and a hanging fiber wall formed from the semi-molten fibers hangs down from the at least one line-shaped member in,a tangled state and crossing the wave-shaped portions.]
**[6**|This eliminates the need for a surface (e.g. a vertical surface or a steeply inclined surface) for forming the hanging fiber wall. In other words, a surface such as a vertical surface or a steeply inclined surface can be eliminated from a forming surface mold. This enables simplification of a mold even if the three-dimensional non-woven fabric having a complicated shape is formed.**]**
**[7**|According to a fourth aspect of the invention, the fabric is a filter having a filtering portion, and the filtering portion includes the wave-shaped portions.**]**
**[8**|The hanging fiber wall prevents the wave-shaped portions of the filtering portion of the filter from coming close to each other. Specifically, the hanging fiber wall thus prevents the wave-shaped portions from even partially adhering to each other due to negative pressure of a fluid (e.g., air) passing through the filtering portion. This suppresses increase in resistance to the fluid passing through the filtering portion.**]**

### BRIEF DESCRIPTION OF THE DRAWINGS

The foregoing and further objects, features and advantages of the invention will become apparent from the following description of preferred exemplary embodiments with reference to the accompanying drawings, wherein like numerals are used to represent like elements and wherein:
Fig. 1A is a perspective view illustrating a method for manufacturing a three-dimensional non-woven fabric (filter) according to a first exemplary embodiment of the invention;
Fig. 1B is a longitudinal cross-sectional view taken along line IB-IB of FIG. 1A, showing the three-dimensional non-woven fabric during the manufacturing process;
Fig. 2 is a perspective view of the back surface of the filter according to the first exemplary embodiment of the invention;
Fig. 3 is a perspective view of a modification of a forming mold of the filter according to the first exemplary embodiment of the invention;

### DETAILED DESCRIPTION OF THE PREFERRED EMBODIMENT

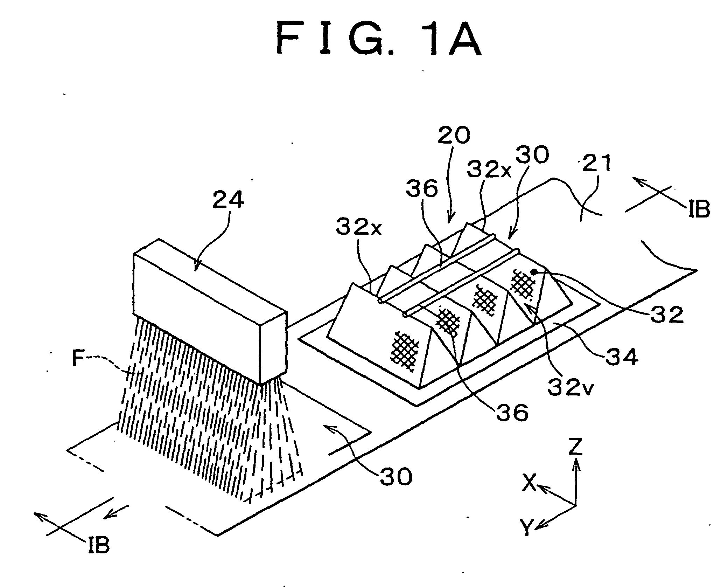

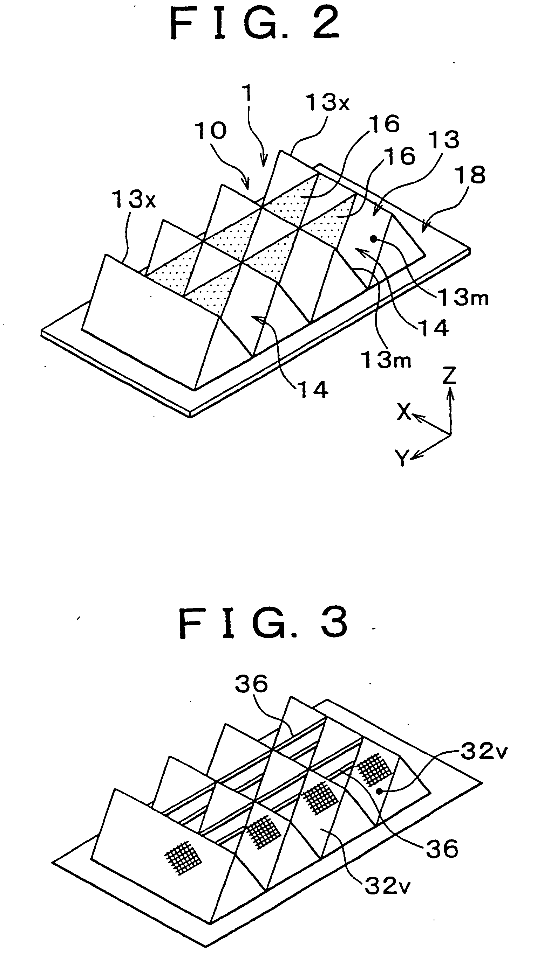

Hereinafter, a three-dimensional non-woven fabric according to an exemplary embodiment of the invention will be described with reference to Figs. 1A to 3. In Fig. 2, the X1 direction is the width direction of the filter, the Y1 direction is the longitudinal direction thereof, and the Z1 direction is the height direction thereof.

As shown in Fig. 2, the filter 1 of the present embodiment includes a filtering portion 10 for filtering a fluid and a peripheral portion 18 formed around the filtering portion 10.

The filtering portion 10 is formed from a plurality of wave-shaped portions 13. More specifically, the plurality of wave-shaped portions 13 are arranged side-by-side and connected together to form the filtering portion 10. Each wave-shaped portion 13 has a shape of a substantially triangular prism. For simplicity, the filtering portion 10 includes four wave-shaped portions 13 in the figure. However, the filtering portion 10 may include five or more wave-shaped portions 13. Each wave-shaped portion 13 of the filtering portion 10 is formed like an opened container. In other words, each wave-shaped portion 13 is opened on the side (not shown) facing the peripheral portion 18 of the filter 1.

The filtering portion 10 has V-grooves 14 at its back surface. Each V-groove 14 is formed by respective inclined surface 13m of adjacent wave-shaped portions 13. A pair of substantially triangular partition walls 16 divide each V-groove 14 into three parts in the width direction (X direction) of the filter 1. The partition walls 16 are substantially triangular vertical walls to prevent deformation of the wave-shaped portions 13 in the Y direction (the longitudinal direction of the filter 1). The partition walls 16 extend perpendicular to the ridges 13x of the wave-shaped portions 13.

The partition walls 16 arranged within the V-grooves 14 prevent the respective inclined surfaces 13m of adjacent wave-shaped portions 13 from getting close to or away from each other. The partition walls 16 thus prevent the respective inclined surfaces 13m of adjacent wave-shaped portions 13 from even partially adhering to each other due to a negative pressure of the fluid passing through the filtering portion 10. This suppresses an increase in resistance to the fluid passing through the filtering portion 10.

The filter 1 is attached within a housing (not shown) with its peripheral portion 18 being held by a holding portion of the housing.

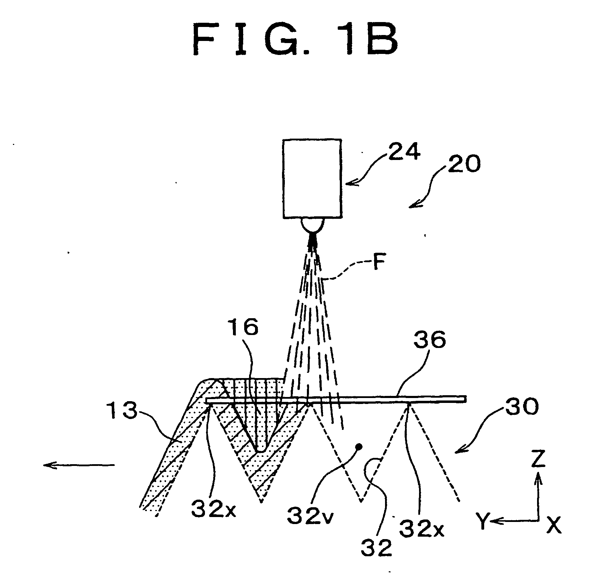

Hereinafter, a facility for manufacturing the filter 1 will be described briefly with reference to Figs. 1A and 1B. Thereafter, a method for manufacturing the filter 1 by using that facility will be described.

The filter manufacturing facility 20 includes a horizontal conveyor 21. A plurality of forming molds 30 (only one forming mold is shown in Fig. 1A) are sequentially arranged on the conveyor 21. It is herein assumed that the X2 direction is the width direction of the conveyor 21, the Y2 direction is the traveling direction thereof, and the Z2 direction is the height direction thereof.

The forming mold 30 has a first forming surface 32 for forming the filtering portion 10 of the filter 1, and a second forming surface 34 for forming the peripheral portion 18 of the filter 1. The first forming surface 32 for forming the filtering portion has the same shape as that of the front surface of the filtering portion 10 (i.e., the surface opposite to that having the partition walls 16). The second forming surface 34 for forming the peripheral portion has the same shape as that of the surface of the peripheral portion 18. Each of the first forming surface 32 for forming the filtering portion and the second forming surface 34 for forming the peripheral portion is formed from a permeable material such as wire mesh. Line-shaped members 36 are mounted on the ridges 32x of the first forming surface 32 for forming the filtering portion of the forming mold 30 at the positions corresponding to the partition walls 16. More specifically, two line-shaped members 36 are mounted at a prescribed distance therebetween on the ridges 32x of the first forming surface 32 for forming the filtering portion. The two line-shaped members 36 extend in parallel with each other and perpendicular to the ridges 32x (that is, in the Y2 direction).

A spinning nozzle 24 is mounted at a prescribed position above the conveyor 21. For example, the spinning nozzle 24 is a nozzle based on a melt-blow method. More specifically, the spinning nozzle 24 spins fibrous resin F (hereinafter, referred to as fibers F) injected from a not-shown extruder onto the first forming surface 32 for forming the filtering portion and the second forming surface 34 for forming the peripheral portion of the forming mold 30. The spinning nozzle 24 spins semi-molten fibers F. These semi-molten fibers F are thus stacked on the first forming surface 32 for forming the filtering portion and the second forming surface 34 for forming the peripheral portion and the like. As a result, the fibers F contact each other and are thus fusion-bonded into a non-woven fabric.

Hereinafter, a method which is not part of the invention for manufacturing the filter 1 will be described.

First, while the spinning nozzle 24 is spinning the fibers F at a substantially constant rate, the conveyor 21 is driven at a constant speed so that the forming mold 30 passes under the spinning nozzle 24 at a constant speed. As a result, as shown in Fig. 1B, the semi-molten fibers F are stacked with a substantially constant thickness on the first forming surface 32 for forming the filtering portion and the second forming surface 34 for forming the peripheral portion of the forming mold 30 successively from the leading end of the Y direction (i.e., the left end in the figure). The line-shaped members 36 of the forming mold 30 are entwined with the fibers F. Moreover, the fibers F become tangled on each other. As a result, the fibers F hang down from the line-shaped members 36, forming substantially triangular, hanging fiber walls between the line-shaped members 36 and V-groove portions 32v of the first forming surface 32 for forming the filtering portion.

Note that the hanging fiber walls have a thickness smaller than that of the fibers F stacked on the first forming surface 32 for forming the filtering portion and the like.

The fibers F stacked on the first forming surface 32 for forming the filtering portion of the forming mold 30, the fibers F hanging down from the line-shaped members 36 and the fibers F stacked on the second forming surface 34 for forming the peripheral portion contact each other and are thus fusion-bonded into a non-woven fabric. The non-woven fabric of the fibers F stacked on the first forming surface 32 for forming the filtering portion corresponds to the wave-shaped portions 13 of the filtering portion 10 of the filter 1. The non-woven fabric of the fibers F hanging down from the line-shaped members 36 (i.e., the hanging fiber walls) corresponds to the partition walls 16 of the filtering portion 10. The non-woven fabric of the filters F stacked on the second forming surface 34 for forming the peripheral portion corresponds to the peripheral portion 18. In this way, spinning semi-molten fibers F from the spinning nozzle 24 onto the forming mold 30 enables the wave-shaped portions 13, the partition walls 16 and the peripheral portion 18 to be formed integrally.

The filter 1 thus formed is removed from the forming mold 30. A finishing process is then conducted to complete the filter 1. The line-shaped members 36 are left within the partition walls 16 of the filter 1.

According to this method for manufacturing the filter embodiment, the semi-molten fibers F hanging down from the line-shaped members 36 of the forming mold 30 get tangled each other to form the partition walls 16 of the filter 1. This eliminates the need for a forming surface (e.g., a vertical surface or a steeply inclined surface) for forming the partition walls 16. In other words, a surface such as a vertical surface or a steeply inclined surface can be eliminated from the first forming surface 32 for forming the filtering portion of the forming mold 30. This enables a simplified forming mold 30 to be implemented even if the filter 30 having a complicated shape is to be formed.

The filtering portion 10 is formed from the plurality of wave-shaped portions 13 and the partition walls 16 extending perpendicular thereto. The partition walls 16 prevent the wave-shaped portions 13 of the filtering portion 10 from coming close to each other. In other words, the partition walls 16 prevent the wave-shaped portions 13 from even partially adhering to each other due to a negative pressure of the fluid passing through the filtering portion 10. This suppresses increase in resistance to the fluid passing through the filtering portion 10.

Note that, in the present embodiment, the line-shaped members 36 are arranged on top of the V-groove portions 32v of the first forming surface 32 for forming the filtering portion so that the fibers F hang down from the line-shaped members 36 to form the partition walls 16. As shown in Fig. 3, however, the line-shaped members 36 may be formed not only on the uppermost portion of the V-groove portions 32v but also below the uppermost portion of the V-groove portions 32v so that the fibers F hang down from the line-shaped members 36 to form the partition walls 16. Alternatively, a vertical mesh (not shown) may be mounted in each V-groove portion 32v so that the fibers F hang down from the vertical meshes to form the partition walls 16.

In the present embodiment, the filter 1 is finally removed from the forming mold 30. However, in the case where a light-weight forming mold 30 is used, the forming mold 30 may be integrated with the filter 1 so that the forming mold 30 is used as a framework of the filter. This improves the strength of the filter 1.

## Claims

1. A mold for manufacturing a three-dimensional non-woven fabric by spinning semi-molten fibers, comprising:
- a first forming surface (32) which has a plurality of wave-shaped portions and which is provided for forming a filtering portion (10); and
- at least one line-shaped member (36) as a second forming surface being mounted on ridges (32x) of the wave-shaped portions.

2. The mold according to claim 1, wherein two line-shaped members (36) are mounted on the ridges (32x) at a prescribed distance from each other.

3. A three-dimensional non-woven fabric, formed by using the mold according to any of claims 1 and 2 and spinning semi-molten fibers onto the mold, said fabric comprising:
- a plurality of wave-shaped portions (13); and
- a hanging fiber wall (16) formed from the semi-molten fibers hanging down from the at least one line-shaped member (36) in a tangled state and crossing said wave-shaped portions (13).

4. The three-dimensional non-woven fabric according to claim 3, wherein said fabric is a filter having a filtering portion (10), and the filtering portion (10) includes said plurality of wave-shaped portions (13).

## Patentansprüche

1. Form zur Herstellung eines dreidimensionalen, nicht gewebten Vlieses durch Auflegen halb geschmolzener Fasern, mit:
- einer ersten Formungsoberfläche (32), die eine Mehrzahl von wellenförmigen Abschnitten aufweist und die zur Formung eines Filterungsabschnitts (10) vorgesehen ist; und
- wenigstens einem linienförmigen Element (36) als einer zweiten Formungsoberfläche, das auf Kanten (32x) der wellenförmigen Abschnitte angebracht ist.

2. Form nach Anspruch 1, wobei zwei linienförmige Elemente (36) auf den Kanten (32x) in einem vorbestimmten Abstand zueinander angebracht sind.

3. Dreidimensionales, nicht gewebtes Vlies, das unter Verwendung der Form gemäß einem der Ansprüche 1 und 2 und Auflegen halb geschmolzener Fasern auf die Form gebildet wird, wobei das Vlies umfasst:
- eine Mehrzahl von wellenförmigen Abschnitten (13); und
- eine Hängefaserwand (16), die aus den halb geschmolzenen Fasern gebildet ist, die von dem wenigstens einen linienförmigen Element (16) in einem ineinander verschlungenen Zustand und die wellenförmigen Abschnitte (13) überkreuzend herabhängen.

4. Dreidimensionales, nicht gewebtes Vlies nach Anspruch 3, wobei das Vlies ein Filter ist, der einen Filterungsabschnitt (10) aufweist, und wobei der Filterungsabschnitt (10) die Mehrzahl von wellenförmigen Abschnitten (13) umfasst.

## Revendications

1. Moule pour la fabrication d'un tissu non tissé tridimensionnel par filage de fibres seini-fondues, comprenant :
- une première surface de formation (32) qui a une pluralité de parties en forme d'ondes et que l'on fournit pour former une partie de filtration (10) ; et
- au moins un élément en forme de ligne (36) comme deuxième surface de formation que l'on monte sur des crêtes (32x) des parties en forme d'ondes.

2. Moule selon la revendication 1, dans lequel on monte deux éléments en forme de ligne (36) sur les crêtes (32x) à une distance définie l'une de l'autre.

3. Tissu non tissé tridimensionnel, que l'on forme en utilisant le moule selon l'une quelconque des revendications 1 et 2 et en filant des fibres semi-fondues sur le mule, ledit tissu comprenant :
- une pluralité de parties en forme d'ondes (13) ; et
- une paroi de suspension de fibre (16) que l'on forme à partir des fibres semi-fondues suspendues vers le bas depuis le au moins un élément en forme de ligne (36) dans un état enchevêtré et croisant lesdites parties en forme d'onde (13).

4. Tissu non tissé tridimensionnel selon la revendication 3, dans lequel ledit tissu est un filtre ayant une partie de filtration (10), et la partie de filtration (10) comprend ladite pluralité de parties en forme d'onde (13).
